# EUROPEAN PATENT APPLICATION

(11) **EP 1 207 506 A2**
(43) Date of publication of application: **22.05.2002**
(21) Application number: 01116445.6
(22) Date of filing: 06.07.2001
(51) Int. Cl.: G07F 19/00, G07F 7/08

(54) **Payment processing method and system**

(30) Priority: 12.10.2000 JP 2000316856
(71) Applicant: Hitachi, Ltd., Chiyoda-ku, Tokyo 101-8010 (JP)
(72) Inventor: Morita, Akira, Hitachi, Ltd., Chiyoda-ku, Tokyo 100-8220 (JP); Chiba, Hiroyuki, Hitachi, Ltd., Chiyoda-ku, Tokyo 100-8220 (JP); Akutsu, Takeshi, Hitachi, Ltd., Chiyoda-ku, Tokyo 100-8220 (JP); Takemoto, Satoshi, Hitachi, Ltd., Chiyoda-ku, Tokyo 100-8220 (JP); Narishima, Yoshitaka, Hitachi, Ltd., Chiyoda-ku, Tokyo 100-8220 (JP); Kawatsura, Yoshiaki, Hitachi, Ltd., Chiyoda-ku, Tokyo 100-8220 (JP); Watanabe, Kiyoshi, Hitachi, Ltd., Chiyoda-ku, Tokyo 100-8220 (JP)
(74) Representative: Strehl Schübel-Hopf & Partner

(57) **Abstract**

The present invention provides a payment method that balances reliability, security, and speed of payments, a system for the same, and a recording medium storing a program for the same. In one embodiment, a financial institution such as a credit company, a bank, or the like determines whether or not a payment request from a buyer is valid using billing information from the merchant involved in the payment and authentication information from the buyer. Then, if the billing information sent from the merchant does not match the ordering information extracted from the authentication information, the payment request is rejected.

## Description

### BACKGROUND OF THE INVENTION

The present invention relates to a method for processing payments used in commercial transactions, a system for the same, and a recording medium storing a program for the same. More specifically, the present invention relates to a method for processing payments used in commercial transactions, a system for the same, and a recording medium storing a program for the same wherein payment requests from the party concerned payment is processed based on information that changes according to the payment information or ordering information or purchasing information, thus providing secure commercial transactions.

In recent years, various types of on-line transactions have been provided where a buyer uses a network to request purchases of products and services from a merchant. An example of a payment method for these on-line transactions is presented in Japanese laid-open patent publication number 2000-148854, where payment from an on-line transaction is directly deposited to a financial institution by the buyer. In another "on-line payment" method, the merchant makes a payment request to the financial institution. With current on-line payments, credit cards are often used. When credit cards are used for on-line payments, the buyer notifies the merchant of the buyer's credit card number and requests payment be made with the card. The merchant performs a payment approval operation (credit operations such as authorisation and capture) with regard to the credit card company for the product price, thus allowing the product to be sold on the basis of the card company's approval.

However, in the conventional technologies described above, reliability, security, and quickness of payments in on-line transactions are not given adequate attention. In the method where the buyer requests a direct deposit to the financial institution, the merchant is given the burden of querying the contents of the deposit to determine the deposit status and checking to see that the appropriate amount has been deposited. If there is a discrepancy in the contents of the deposit request, complications arise such as contacting the buyer. The buyer is also burdened with tasks after the deposit such as confirming whether the deposit was properly made and whether the resulting payment was correct. Further burdens arise if there is a discrepancy in the contents of the deposit request.

With on-line payments, determination of whether payment is possible or not can take place relatively smoothly through the financial institution. However, to provide this type of payment service over an open network such as the Internet requires security to be maintained in order to prevent leakage of private information such as credit card numbers. However, even with credit card payments that use encrypted path technology such as SSL (Secure Socket Layer)/ TLS (Transport Layer Security), the buyer must provide the merchant with the credit card number. With credit card payments, the buyer can use the card usage statement to confirm the appropriateness of the billing from the credit card company. While the procedure is troublesome, payment can be refused if there is an inappropriate billing item. However, with immediate payments such as payments made with debit cards and cash cards, the payment is executed immediately and there is no subsequent process for confirming the billing as with credit card payments. For this reason, the financial institution must perform identity confirmation carefully before executing payment. For example, an identity confirmation method similar to that used in immediate payments from bank accounts can be used, where the account number and information that can only be known by the buyer (secret information) are used. However, with immediate payments that span three parties (the buyer, the merchant, and the payment institution), using the same system as credit payments will result in the buyer sending the merchant the account number and the secret information, thus revealing the secret information to a third party. This problem comes up not only with on-line transactions but also with credit card payments in real transactions and the like.

One possible method is described in Japanese laid-open patent publication number 10-326310, where secret information valid only for several times payment is used. However, in this technology, the financial institution starts to process payment, receiving solely on the billing information for the transaction as provided by the merchant. Thus, if the billing information from the merchant is inappropriate, the buyer would incur a loss. Also, since the secret information is changed at the initiative of the buyer, it is not enough to prevent masquerading if credit card number and debit card number is leaked.

### SUMMARY OF THE INVENTION

The present invention provides a payment method that balances reliability, security, and speed of payments, a system for the same, and a recording medium storing a program for the same.

One embodiment of the present invention provides a method wherein a financial institution (payment processing institution) such as a credit company, a bank, or the like determines whether or not a payment request is valid and identifies payment contents using authentication information that varies based on payment information or ordering information or purchase information from a user (debtor, buyer, or the like) involved in the payment. The payments referred to here can include deposits, transfers, credit payments, debit payments, checks, and the like. Since the payment contents are reflected in the authentication information, the payment intended by the payer can be executed reliably and safely.

Also, billing information (such as transaction contents information), which is ordinarily counterpart of ordering information or payment information or purchase information, from the creditor (merchant or the like) involved in the payment and the authentication information that varies based on the ordering or the payment or the purchase information from the user (debtor, buyer, or the like) are used to determine whether the payment request is valid or not. As a result, the financial institution serving as the payment institution can easily confirm whether the billing information requested by the merchant matches the ordering or the payment or the purchase information indicated by the user. Also, by using these methods, the financial institution can confirm the user's identity using authentication information that can be sent to a third party other than the financial institution, i.e., information that does not require strong security since it is not fixed and can change with each transaction. Also, even if the user's authentication information is sent to the financial institution by way of a third party, the user's identity and the payment contents can be reliably confirmed, thus providing safe and reliable payment. Furthermore, leaks of private information can be prevented. The ordering or the payment or the purchase information and billing information referred to here can include payment content (transaction content) information such as transaction product information, transaction service information, merchant information, transaction date information, information relating to payment amount (transaction amount), and the like.

More specifically, an embodiment of the present invention provides a payment processing system that is connected to a creditor (merchant) system through a communication network and that responds to payment requests sent through the communication network. A database is used to manage a login information(can be an user ID, a payment identifier, a transaction identifier, a credit card number, a financial institution account number, or the like) of the user (debtor) making the payment through the payment processing system in association with user identity confirmation information (authentication information that is constant with relation to transaction contents, e.g., the credit card number itself, a secret number associated with the credit card number, a password, a pass phrase, or the like). The payment processing system receives from the merchant system: a login information identifying the person making payment to the merchant; billing information; and authentication information generated by the user using the ordering or the payment or the purchase information and the identity confirmation information. The authentication information is variable with relation to the transaction contents and can, for example, be generated using a one-way hash function or the like. The identity confirmation information associated with the login information is extracted from the database. The payment processing system then determines whether the payment request is valid or not using the identity confirmation information, the billing information, and the authentication information. Then, if the billing information sent from the merchant system does not match the ordering or the payment or the purchase information extracted from the authentication information, the payment request is determined to be invalid.

In another embodiment a payment processing method using a payment processing system is provided. The payment processing method includes receiving login information, payment information, and authentication information. The authentication information is generated by a user using the payment information and a first identity confirmation information. Next a second identity confirmation information associated with said login information is extracted from a database. And then a request for a payment is determined to be valid or invalid, using the second identity confirmation information and the payment information and the authentication information.

Yet another embodiment of the present invention provides a payment processing method using a payment processing system. This method includes: receiving login information and authentication information, the authentication information generated by a user using payment information and first identity confirmation information; extracting second identity confirmation information associated with the login information from a database; and determining payment information using the second identity confirmation information and the authentication information.

In a system embodiment of the present invention a payment processing system that is connected to a merchant system by a communication line and that responds to payment requests sent through said communication line is provided. The payment processing system has: a storage device for storing login information and first identity confirmation information for a user, where the user makes payments through the payment processing system; a communication device for receiving from the merchant system the login information identifying the user making payment to the merchant system, billing information, and authentication information generated by the user using ordering information and a second identity confirmation information; and a control device for extracting first identity confirmation information associated with the login information from the storage device and for determining whether the payment request is valid or not using the first identity confirmation information, the billing information, and the authentication information.

In another embodiment a payment processing program used in a financial institution system that is connected to a merchant system by a communication network and that responds to payment requests sent through said communication network is provided The program is stored in a computer-readable medium to control a computer. The payment processing program includes: code for using a database to manage login information of users making payments through the financial institution in association with first identity confirmation information for said users; code for receiving from the merchant system the login information identifying a user making a payment request to the merchant system, first payment amount information for the payment request, and authentication information generated by the user using the first payment amount information and second identity confirmation information; code for extracting first identity confirmation information associated with said login information from said database; code for calculating second payment amount information using said authentication information and said first identity confirmation information; and code for determining whether said payment request is valid comparing said first payment amount information from said merchant system and said second payment amount information.

These and other embodiments of the present invention are described in more detail in conjunction with the text below and attached figures.

### BRIEF DESCRIPTION OF THE DRAWINGS

Fig. 1 gives a block diagram showing an example of a system architecture of an electronic commerce transaction system according to an embodiment of the present invention;
Fig. 2 gives a drawing showing data structures used in a transaction management database;
Fig. 3 gives a drawing showing data structures used in a transaction management database according to an embodiment;
Fig. 4 gives a drawing showing the flow of operations in a shopping transaction in an electronic commerce transaction system according to an embodiment of the present invention;
Fig. 5 gives a drawing showing the flow of operations performed by a buyer in an electronic commerce transaction system according to an embodiment of the present invention;
Fig. 6 gives a drawing showing the flow of operations performed by a merchant in an electronic commerce transaction system according to an embodiment of the present invention;
Fig. 7 gives a drawing showing the flow of operations performed by a financial institution in an electronic commerce transaction system according to an embodiment of the present invention;
Fig. 8 gives a drawing showing a sample display on a display for when a purchase start request is sent in an embodiment;
Fig. 9 gives a drawing showing a sample display on a display for when a purchase request is sent in an embodiment;
Fig. 10 gives a drawing showing a sample display on a display for when a purchase request is sent in an embodiment;
Fig. 11 gives a drawing showing the flow of operations in a shopping transaction in an electronic commerce transaction system according to an embodiment of the present invention; and
Fig. 12 gives a drawing illustrating a method for generating one-time passwords of an embodiment of the present invention.

### DESCRIPTION OF THE SPECIFIC EMBODIMENTS

The embodiments of the present invention will be described in detail, with references to the figures. In the following examples, an embodiment of the present invention is applied to a system in which the buying and selling of merchandise take place through a network and payments are made through a financial institution.

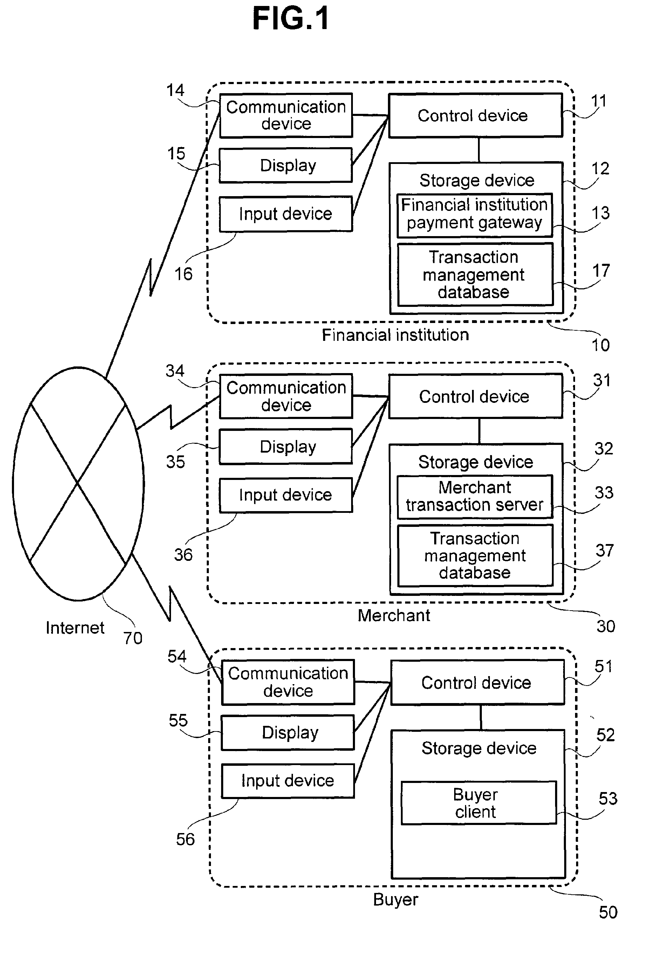

Fig. 1 shows an architecture of an electronic commerce system according to an embodiment of the present invention.

This electronic commerce system includes a buyer (user) system 50, a merchant system 30, and a financial institution system 10. In this embodiment, the buying and selling of merchandise is used as an example. The buyer corresponds to a payer (debtor), the merchant to the payee (creditor), and the financial institution corresponds to the payment institution.

These systems are connected through communication means 70, such as a public network, a dedicated network, or a network such as the Internet.

The buyer system 50 is a personal computer, mobile terminal, or the like that can be connected to a network such as the Internet. It would be desirable for the buyer system 50 includes: an input device 56, such as a keyboard and mouse, that allows the buyer (user) to enter information; a display 55 for displaying information; and a communication device 54 for communicating via a network such as the Internet. A storage device 52 includes: a main memory such as cache and memory; and an external storage device such as a hard drive. A buyer client 53 is equipped with Web browser functions (functions for accessing a specified URL, saving a specified resource to a local storage device, and the like) for HTTP (Hypertext Transfer Protocol)-based communications. The buyer client 53 can also generate one-time passwords (authentication information) described later, based on necessary information. Some of the functions of the buyer client 53 can be provided by the financial institution system or the like using JAVA or the like. With this architecture, the usage load for usage of this system is reduced. A control device 51 is involved in controlling all of these elements and performing program operations.

The merchant system 30 includes: an input device 36; a display 35; a communication device 34; a storage device 32; and a control device 31. These elements have similar properties as those of the buyer system 50. The merchant system 30 also includes a merchant payment server 33 that can provide HTTP-based communication functions and that can communicate with the buyer client 53, a financial payment gateway 13, and the like. The merchant payment server 33 has functions such as storing received data to a local storage device and transmitting data from the local storage device. Also, the merchant payment server 33 manages a transaction management database 37, which contains data described later.

The financial institution system 10 includes: an input device 16; a display 15; a communication device 14; a storage device 12; and a control device 11. These elements have similar properties as those of the buyer system 50. The financial institution system 10 also includes the financial institution payment gateway server 13, which can provide HTTP-based communication and that communicates with the merchant payment server 33 and the like. In addition to functions such as storing received data to a local storage device and transmitting data from the local storage device, the financial institution payment gateway server 13 provides functions for generating one-time passwords, described later, and comparing locally generated one-time passwords with one-time passwords obtained via the network. Also, the financial institution payment gateway server 13 manages a transaction management database 17, which contains data described later. A subset of these functions of the financial institution system 10 can be out-sourced to a service provider or the like.

The functions provided by the buyer system 50, the merchant system 30, and the financial institution system 10 can be provided through software. For example, a storage media can store a program that implements one of the functions of the financial institution payment gateway server 13, and this program can be loaded into the memory of the financial institution system 10 via a driver device (not shown in the figures) connected to the financial institution system 10. Alternatively, the program can be sent to the financial institution system 10 through the Internet 70 and executed.

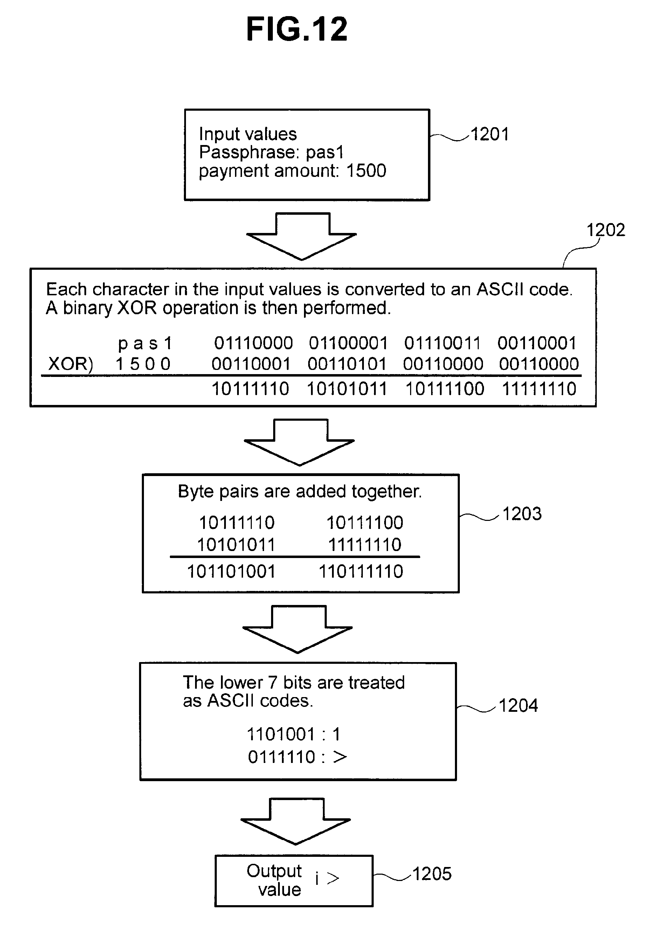

The following is an overview of an embodiment of the present invention. A user using the buyer system 50 shown in Fig. 1 agrees to enter an on-line shopping payment usage contract with the financial institution and uses a one-time password, described later, to agree to make payment. Predetermined conditions (equations, cryptographic algorithms/ techniques, and the like) used to calculate the one-time password must be shared with the financial institution at least before payment for the transaction is made through the financial institution. Next, the user performs negotiations with the merchant using the merchant system 30 for a transaction that involves payment, e.g., purchase of merchandise. A payment request instruction is then sent to the financial institution system 10. When sending this payment request instruction, the user creates authentication information that is related to the ordering or the payment or the purchase information. This allows the financial institution to properly confirm the contents of the negotiation between the user and the merchant (the ordering or the payment or the purchase information) such as the payment amount. The transaction is made safer and more reliable since the financial institution uses this authentication information to evaluate the validity of the payment request instruction. In this specification, the authentication information related to the ordering or the payment or the purchase information is referred to as a one-time password (or processed authentication information). Since this one-time password provides authentication information related to the ordering or the payment or the purchase information, the authentication information will vary according to the payment contents. Thus, a high degree of safety is provided even if the information is leaked to a third party. If secrecy of the authentication information is to be emphasised to provide an even higher degree of safety, however, it would be possible to encrypt the one-time password using a technology for setting up an encrypted link such as SSL/TLS. Alternatively, the one-time password could be used in a payment system known as SECE (Secure Electronic Commerce Environment). Of these methods, the method involving a one-way function (hash function) to generate one-time passwords is expected to be the most effective. As shown in Fig. 12, a one-way function is used to provide an output value (i>) from an input value (e.g., the pass phrase associated with a credit card number is pas1, and the transaction payment amount is 1500). During this calculation, a portion of the information obtained from the input value is dropped (1204). This makes it very difficult to determine the input value from the output value. By using the output value as a one-time password, a third party will not be able to tamper with the input value (in this example, the pass phrase and the payment amount of the transaction). Furthermore, as 1202 and 1204 from Fig. 12 shows, the use of the one-way function reduces the size of the output data relative to the input value. Thus, the transfer data volume is reduced by using this output value as the one-time password. This limits increases in communication traffic. As a result, reliability and safety in transactions can be increased while limiting increases in the transfer data volume and the volume of data handled by the systems. This also allows the payment response to be generated quickly, which is a very important advantage in transaction payment processing. It should also be noted that the advantages derived from the use of one-time passwords, e.g., improved safety and reliability in transactions, can be provided as long as the one-time password is created using a method that prevents a third party other than the user and the financial institution from accessing the information. For example one-time passwords can be generated with simple operations (e.g., simple addition or subtraction) performed on a pass phrase associated with a credit card number or the like (or any other information that can be used for identity confirmation) and information identifying the transaction content (information relating to the payment amount would be desirable, but transaction contents can also be determined to some degree simply with transaction merchandise information, transaction service information, merchant information, transaction date information and the like, so these can be useful as well). Alternatively, data can simply be added to the pass phrase (e.g., adding check digits derived from the payment amount).

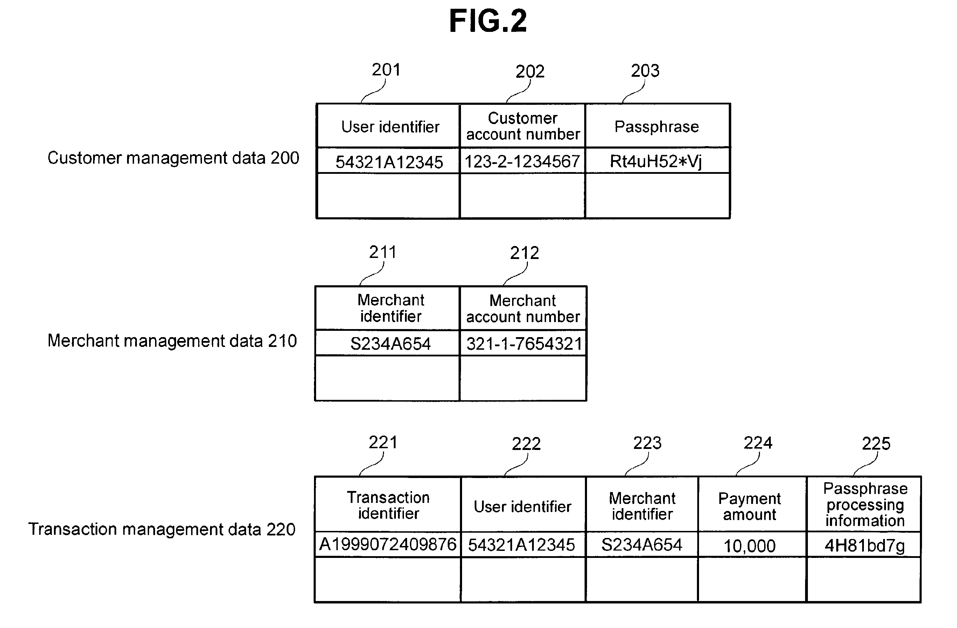

Next, an embodiment of the present invention will be described in more detail. Fig. 2 shows data structures used in the transaction management database 17 of the financial institution system 10. These database structures show one example of implementation, and various variations can be made on the management method. Based on the on-line payment transaction agreements made with the clients (the purchasers), the financial institution sets up ahead of time, for each client, a client management data 200 entry containing a user identifier (user ID) 201, an account number (credit number) 202 for the account used for payments, and a pass phrase 203 serving as information used for identification. In this example, the user identifier 201 is an identifier to be used primarily for Internet transactions. However, it would also be possible to use the account number 202 as an identifier instead. Also, based on the membership agreements made with the merchants, the financial institution sets up ahead of time, for each merchant, a merchant identifier 211 identifying the merchant, and a merchant management data 210 containing an account number 212 for use with payments. Furthermore, for each transaction, the following information is managed: a transaction identifier 221 used for managing payment transactions; and a transaction management data 220 entry containing a user identifier 222, a merchant identifier 223, and a payment amount 224 for identifying information needed for payment, i.e., the purchaser, who is the asset source, the merchant, who is the asset destination, and the payment amount. In this embodiment, a pass phrase processing information (challenge) 225, described later, is associated with each transaction. While pass phrase processing information can be associated with each client, it would be desirable to manage the information in association with individual transactions to allow handling of cases where there are multiple transactions for a single client.

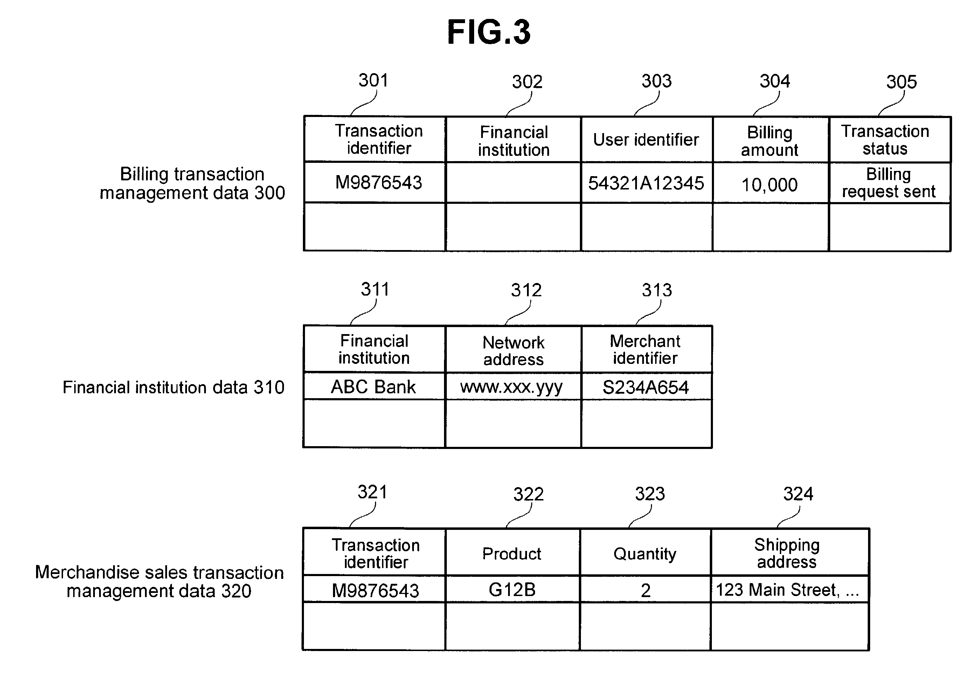

Fig. 3 shows examples of data structures used in the transaction management database 37 of the merchant system 30. Based on the membership agreements with the financial institutions, the merchant sets up ahead of time, for each financial institution, a merchant identifier 313 assigned by the financial institution and a financial institution data 310, which includes a network address 312 for the financial institution. Also, for each transaction, billing information accompanying merchandise transaction is managed in a billing transaction management data 300 entry, which includes a transaction identifier 301, a financial institution 302 used for billing, a user identifier 303, a billing amount 304, and a transaction status 305 indicating the status of the transaction (billing). If the merchant mediates (including transfer of information) information associated with payment between the purchaser and the financial institution, this transaction status is continuously updated. This is desirable for the merchant since the transaction status can be known in a more precise manner.

The merchant also manages product sales transaction management data 320 entries, which contain a transaction identifier 321, a quantity 323, and a user shipping address 324.

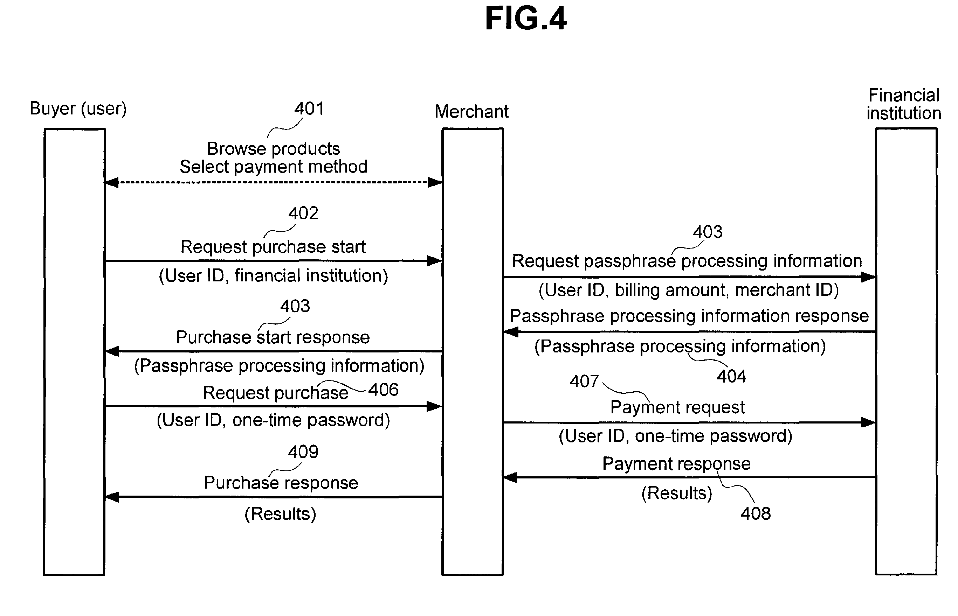

Fig. 4 shows the flow of operations when shopping is performed with an electronic commerce transaction system using an embodiment of the present invention. The buyer negotiates for the purchase of a product and, when some type of payment must be made, selects a payment method (e.g., credit card payment, debit card payment) (401). Next, the buyer gives the merchant an identifier (e.g., user ID, credit card number) to identify the buyer to the financial institution along with information identifying the financial institution (402). The merchant sends the financial institution the identifier for identifying the buyer to the financial institution, billing information such as the billing amount, and the merchant identifier for identifying the merchant to the financial institution. The merchant also notifies the financial institution that the buyer wants to make a payment (403). Next, the merchant receives from the financial institution the pass phrase processing information (challenge), which is used when the buyer generates a one-time password (404). This is sent to the buyer (405). The pass phrase processing information referred to here is a value that changes with each transaction and is used to generate one-time passwords. Examples of pass phrase processing information include numbers that increase (decrease) with each transaction and random values that include binary data. Since this pass phrase processing information is used to provide more security for the one-time password, whether or not to use the pass phrase processing information can be determined based on usage conditions for the one-time password (e.g., if the payment amount is large, if frequent purchases will be made).

The buyer generates a one-time password and sends it to the merchant (406). The merchant sends the one-time password received from the buyer to the financial institution and requests payment (407). The financial institution verifies the one-time password to confirm the buyer's identity and to see that the payment or the ordering or the purchase information from the buyer and the billing information from the merchant match. The financial institution then replies to the merchant indicating whether payment can be made or not (408). The merchant uses this information to determine if the transaction can be concluded or not and informs the buyer of the result (409). By having the merchant act as the information between the buyer and the financial institution for information relating to payment, the merchant can quickly determine transaction (payment) status.

Next, the flow of operations performed by the buyer, the merchant, and the financial institution will be described.

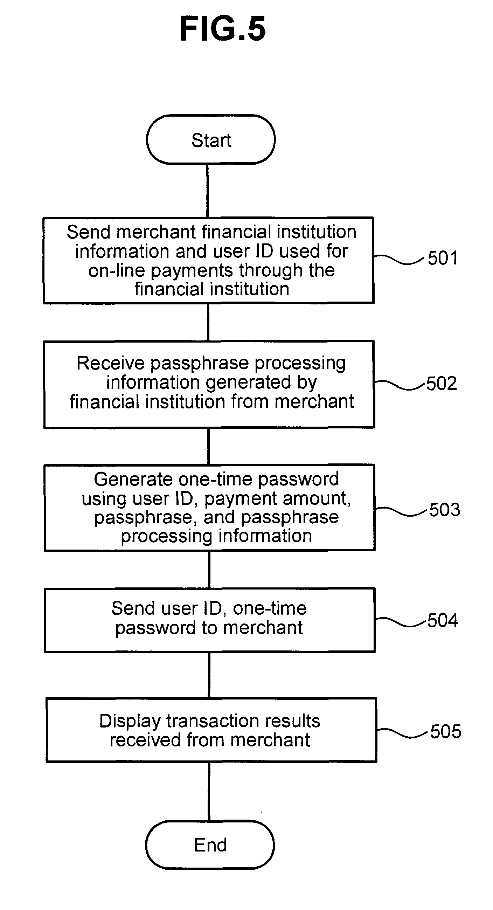

Fig. 5 shows the flow of operations performed by the buyer. When buying a product from the merchant, the buyer checks the purchase contents and selects a financial institution through which to make payment out of a list of financial institutions that can be used to make the payment requested by the merchant. The buyer then sends the merchant this selected financial institution information along with buyer identification information used by the financial institution to make on-line payments (at least one of a user ID, an account number, or the like). The buyer informs the merchant of an intent to pay through that financial institution and requests the merchant receive the pass phrase processing information from the financial institution (501: send request to start purchase). Next, in response to the purchase intention, the pass phrase processing information generated by the financial institution indicated by the buyer is received by way of the merchant (502: receive purchase start response). Next, a one-time password is generated using an on-line payment user ID, the received pass phrase processing information, the payment amount agreed to with the merchant, and a pass phrase (identity confirmation information) known only to the buyer and the financial institution (503). In this case, a one-way hash function is used to generate the one-time password. The information listed above is used as input to the one-way hash function, and the resulting hash value is used as the one-time password. Next, in order to instruct the financial institution to make payment of the payment amount, the buyer sends the merchant the user ID and the one-time password generated at step 503 as a purchase request (send purchase request). In response to the purchase request from step 504, a purchase result indicating whether the purchase was concluded is received from the merchant, and the buyer confirms the results of the transaction with the merchant and the results of the payment through the financial institution (505: receive purchase response).

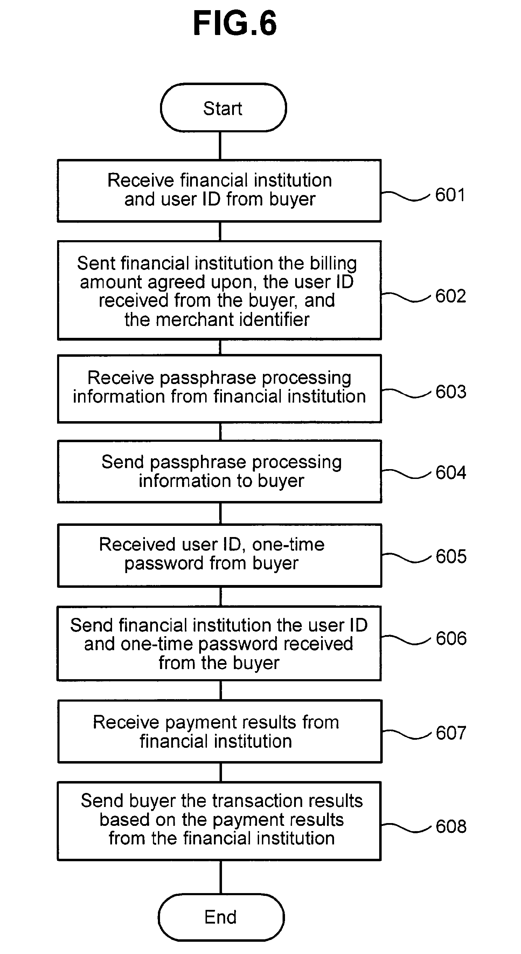

Fig. 6 shows the flow of operations performed by the merchant. The merchant presents the buyer with a list of financial institutions through which payments can be made so that the buyer can indicate the financial institution to be used for payment, thus establishing the buyer's payment intention and the financial institution to be used. Then, a user ID allowing the financial institution to identify the buyer is received so that the merchant can request the financial institution, on the buyer's behalf, to send the pass phrase processing information needed by the buyer to have the financial institution make payment (601: receive purchase start request). Next, in order to obtain the pass phrase processing information, the merchant sends the financial institution selected by the buyer the user ID received at step 601, the billing amount agreed to with the buyer, and information identifying the merchant account (merchant ID) used to receive the billing amount from the buyer (602: send pass phrase processing information request). Pass phrase processing information used when the client instructs the financial institution to make payment is received from the financial institution as a response to step 602 (step 603: receive pass phrase processing information response). The pass phrase processing information is then sent to the buyer as a response to the purchase start request received at step 601 (604: send purchase start response). The one-time password generated for this transaction and a user ID is received from the buyer to indicate purchase intention and request purchase (605: receive purchase request). Next, the merchant sends the one-time password and the user ID received from the buyer and requests payment (606: send payment request). The payment results are received as the response to the payment request from step 606. Based on these payment results, the merchant decides whether the transaction can be concluded and, if necessary, provides services such as the shipping of a product (607: receive payment response). Then, the merchant sends the buyer transaction results indicating whether the transaction can be concluded, as decided at step 607 (608: send purchase response).

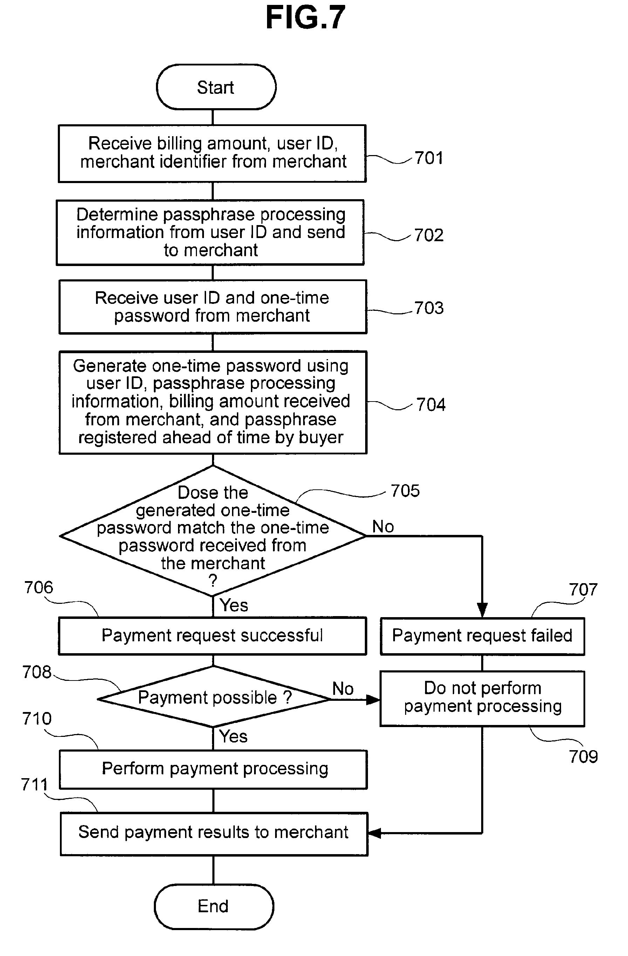

Fig. 7 shows the flow of operations performed by the financial institution. The financial institution receives from the merchant the user ID of the buyer, the billing amount, and merchant account identification information (merchant ID) (701: receive pass phrase processing information request). The billing amount received here is the amount that the merchant claims to have agreed to with the buyer. The financial institution uses the merchant ID to identify the asset destination to be used when making payment. Next, the buyer is identified using the user ID and appropriate pass phrase processing information for the buyer is generated. This is sent as the password processing response to the merchant (702: send pass phrase processing information response). Then, a payment request is received from the merchant in the form of a user ID and a one-time password (703: receive payment request). Next, the one-time password is verified (704, 705: verify one-time password). This verification is performed by checking to see if the one-time password generated by the buyer and received from the merchant is identical to a one-time password generated by the financial institution using the user ID of the buyer, the billing amount received by the merchant, the currently active pass phrase processing information for the buyer, and the buyer's pass phrase registered ahead of time. The currently active pass phrase processing information referred to here is the pass phrase processing information sent at step 702. As in the buyer's side, a one-way function is sued to verify the one-time password. The information listed above is used as input to the one-way hash function to obtain a hash value. The hash value obtained in this manner is compared with the received one-time password to see if the two match. If the two passwords match as a result of the comparison at step 705, the financial institution determines that the payment request is successful (706). If the payment request is successful, the financial institution determines whether payment using the standard method is possible (708). If so, payment processing is performed (710). This payment processing involves transferring the amount indicated by the payment amount from the client account indicated by the user ID to the merchant account indicated by the merchant ID (payment approval in the case of credit card payments). If the passwords do not match at step 705, the payment request fails (707) and payment processing is not performed (708). Factors that can lead to this include discrepancies between the payment amount indicated by the client and the billing amount indicated by the merchant and discrepancies in the pass phrase. In other words, there may have been an input error in the pass phrase, someone who did not know the pass phrase may have generated the one-time password, the pass phrase processing information used to generate the one-time password may not have been active, or the like.

Finally, the payment results from step 709, step 710 are sent to the merchant as the payment response (711: send payment response).

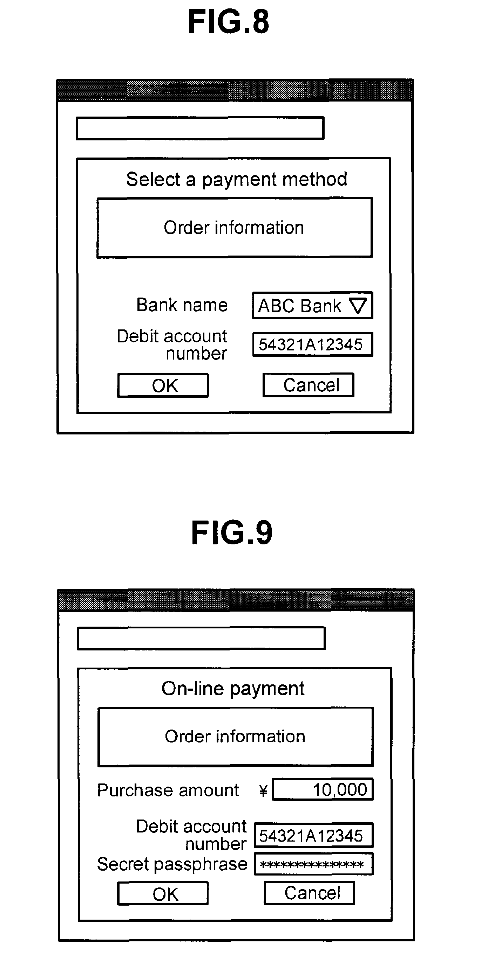

Fig. 8 shows a client display on the display 55 of the buyer system 50 when the purchase start request is sent. The input device 56 is used to select a financial institution to be used for payment out of the list of financial institutions presented by the merchant.

After a user ID at the financial institution (the "debit account number" in Fig. 8) is entered, the "OK" button is pressed. The selected bank information and the user ID are sent to the merchant as a purchase start request to indicate intention of payment from this account.

Fig. 9 shows a client display on the display 55 of the buyer system 50 when the purchase request is sent. When the purchase start response is received, the buyer client requests input of a purchase amount (payment amount), a user ID, and a pass phrase. Once these items are entered and the "OK" button is pressed, a one-time password generation operation is begun based on the entered information and the pass phrase processing information. The generated one-time password and the user ID are then sent to the merchant as a purchase request, and purchase of the product based on payment through the specified financial institution is requested.

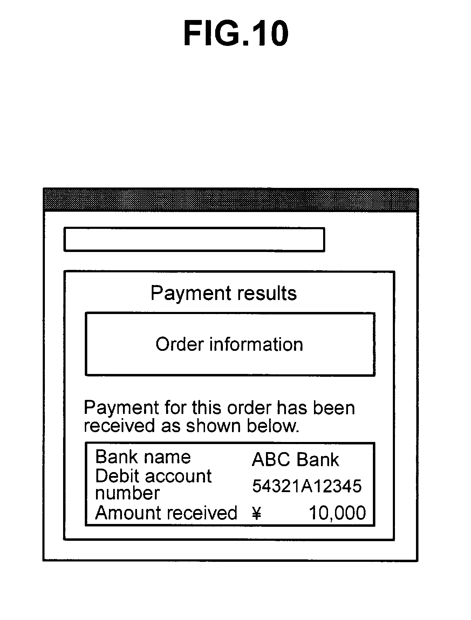

Fig. 10 shows a client display on the display 55 of the buyer system 50 when the purchase response is received. This figure shows purchase results sent as a purchase request. This allows the buyer to confirm that the purchase amount has been paid through the financial institution indicated by the buyer and the transaction with the merchant indicated in the purchase request has been finalised.

In the embodiment described above, a hash value calculation is used to obtain a changing one-time password that indicates the identity of the buyer and payment information. However, as long as the objectives described above are achieved, the password can be obtained using a method other than hash calculations.

In the embodiment described above, the one-time password is generated using the purchase amount, which serves as information that allows the financial institution to identify the payment amount, and the user ID, which serves as information that allows the financial institution to identify the buyer (client). However, as long as the objectives described above are achieved, the one-time password can be generated using information other than the purchase amount such as the purchase product information and information other than the user ID such as a client account number associated with the user ID.

Furthermore, in the embodiment described above, the merchant rather than the buyer handles the retrieval of the pass phrase processing information used to vary the one-time password for each transaction. However, the pass phrase processing information needs only to be information that changes with each transaction and that can be shared by the buyer and the financial institution. As long as these conditions are fulfilled, the one-time password can be generated without the transfer of the pass phrase processing information. For example, a pass phrase processing information generating device that is synchronised with the financial institution device can be used.

Furthermore, in the embodiment described above, the one-time password is sent by way of the merchant. However, it would also be possible to have the one-time password sent directly from the buyer to the financial institution.

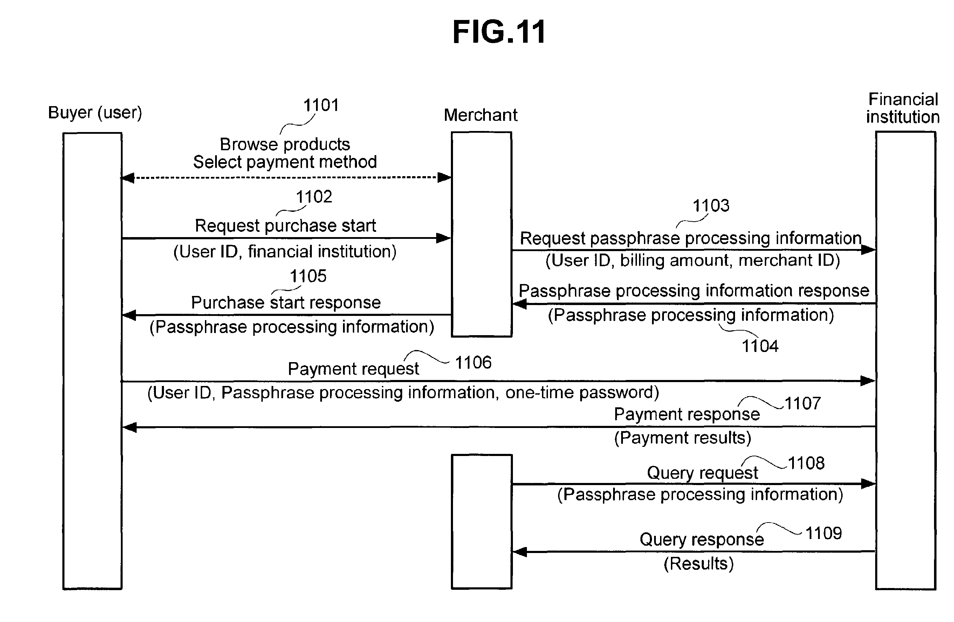

This is described with reference to Fig. 11. The operations are identical to the flow of operations shown in Fig. 4 up to the point where the buyer receives the purchase start response and generates a one-time password. Then, the user ID, the one-time password, and, if necessary, the password processing information, serving as supplementary information for the financial institution to identify the transaction, are sent as a payment request to the financial institution rather than the merchant. As in the case where the payment request is received from the merchant, the financial institution verifies the one-time password and performs payment processing depending on the verification results. The merchant queries the financial institution to determine if payment is possible and determines whether the transaction can be finalised or not based on payment results.

When the one-time password is sent directly from the buyer to the financial institution, the one-time password does not necessarily need to be changed each time to ensure secure transactions. Thus, it would be possible to eliminate the password processing information when generating the one-time password.

The embodiments described above are implemented using an electronic commerce transaction system that uses a buyer system, a merchant system, and a financial system. However, an embodiment of the present invention can also be used for payments in real-time transactions between a buyer and a merchant or the like. In such cases, payment requests can be made to a financial institution system by, for example, having a user directly send a financial institution system a one-time password using a mobile terminal, an IC card, or the like. Alternatively, payment requests to a financial institution system can be made through a merchant system or the like.

As described above, the present invention allows confirmation of whether or not creditor (payer) payment information approved by a debtor (payee) matches payment information notified by the creditor to the financial institution, thus allowing payments to be made only when the payment information between the creditor and the debtor match.

Also, a one-time password can be checked to confirm that the creator is someone who knows a pass phrase that can only be known by the holder of an account at the financial institution, i.e., the creator is the owner of the account. This prevents a third party other than the holder of the account from making transactions (i.e., masquerading as the account holder).

Furthermore, since the pass phrase processing information changes each time, the one-time password changes each time as well. Thus, a recipient can request payment using the one-time password only once.

Thus, by using a changing one-time password that is linked to payment information and that can be used just once, information that does not require secrecy can be used to confirm the identity of the payer while providing safe and reliable payments.

Also, encryption and electronic signatures are not needed to generate one-time passwords. This provides a reduced burden on computer resources and on the user making payment.

With the present invention as described above, a payment method can be provided that offers reliable, secure, and fast payments.

Although the above functionality has generally been described in terms of specific hardware and software, it would be recognised that the invention has a much broader range of applicability. For example, the software functionality can be further combined or even separated. Similarly, the hardware functionality can be further combined, or even separated. The software functionality can be implemented in terms of hardware or a combination of hardware and software. Similarly, the hardware functionality can be implemented in software or a combination of hardware and software. Any number of different combinations can occur depending upon the application.

Many modifications and variations of the present invention are possible in light of the above teachings. Therefore, it is to be understood that within the scope of the appended claims, the invention may be practised otherwise than as specifically described.

## Claims

1. A payment processing method using a payment processing system, the method comprising:
receiving login information, payment information, and authentication information, said authentication information generated by a user using said payment information and first identity confirmation information;
extracting second identity confirmation information associated with said login information from a database; and
determining whether a request for a payment is valid using said second identity confirmation information and said payment information and said authentication information.

2. The method of claim 1 wherein said login information is a credit card number.

3. A payment processing method using a payment processing system, the method comprising:
receiving login information and authentication information, said authentication information generated by a user using payment information and first identity confirmation information;
extracting second identity confirmation information associated with said login information from a database; and
determining payment information using said second identity confirmation information and said authentication information.

4. A payment processing method in a financial institution system that is connected to a creditor system through a communication network and that responds to payment requests sent by way of said communication network, the method comprising:
receiving billing information generated by said creditor system and authentication information generated by a debtor which is to make payment to said creditor, said authentication information varying according to ordering information; and
determining whether or not a payment request is valid based on said billing information and said authentication information.

5. The method of claim 4 wherein:
said authentication information is information from which a section of said ordering information is abbreviated; and
said financial institution system determines whether or not said payment request is valid by abbreviating a section of billing information generated by said creditor system and making a comparison with said authentication information.

6. The method of claim 1 or 4 wherein said authentication information is a hash value generated using a hash function.

7. A payment processing method in a financial institution system that is connected to a merchant system through a communication network and that responds to payment requests sent by way of said communication network, the method comprising:
using a database to manage login information of users making payments through said financial institution in association with identity confirmation information for said users;
receiving from said merchant system login information identifying a user of said users making a payment request to a merchant, billing information for said payment request, and authentication information generated by said user using ordering information and said identity confirmation information, wherein said ordering information is a counterpart of said billing information;
extracting identity confirmation information associated with said login information from said database; and
determining whether said payment request is valid or not using said identity confirmation information and said billing information and said authentication information.

8. The method of claim 7 wherein said payment request is rejected if billing information sent from said merchant system is different from ordering information extracted from said authentication information.

9. The method of claim 7 wherein said billing information is billing amount information, said order information is payment amount information, and said authentication information is determined through calculations according to predetermined conditions using said payment amount information and said identity confirmation information.

10. A payment processing method in a financial institution system that is connected to a user system and a merchant system through a communication network and that responds to a payment request of a user sent by way of said communication network, the method comprising:
using a database to manage a user ID of said user making a payment through said financial institution in association with first identity confirmation information and account number for said user;
receiving said user ID and billing amount information, including a first payment amount information, from said merchant system, and authentication information generated by said user system using said first identity confirmation information and said first payment amount information;
extracting second identity confirmation information and said account number associated with said user ID from said database;
calculating a second payment amount information using said authentication information and said second identity confirmation;
determining whether said payment request is valid comparing said billing amount information from said merchant system and said second payment amount information; and
wherein if said billing amount information sent from said merchant matches said second payment amount information, payment processing is performed using said account number.

11. A payment processing method in a financial institution system that is connected to a user system and a merchant system through a communication network and that responds to a payment request sent by way of said communication network, the method comprising:
receiving an user ID and billing amount information from said merchant system, said billing amount information including a first payment amount information;
sending a first information to said merchant system and managing said first information in association with said user ID;
receiving said user ID and a second information generated by said user using said first information, a first identity confirmation information, and said first payment amount information;
extracting a second identity confirmation information associated with said user ID from a database;
calculating second payment amount information using said first information and said second information and said second identity confirmation information; and
determining whether said payment request is valid by comparing said billing amount information from said merchant system and said second payment amount information.

12. The method of claim 11 wherein said first information is a variable information.

13. A payment processing system that is connected to a merchant system by a communication line and that responds to payment requests sent through said communication line, the system comprising:
a storage device storing login information and first identity confirmation information for a user, said user making payments through said payment processing system;
a communication device receiving from said merchant system said login information identifying said user making payment to said merchant system, billing information, and authentication information generated by said user using ordering information and a second identity confirmation information; and
a control device extracting first identity confirmation information associated with said login information from said storage device and for determining whether said payment request is valid or not using said first identity confirmation information, said billing information, and said authentication information.

14. A system sending payment requests to a financial institution system connected by communication means, the system comprising:
means for generating authentication information that changes based on payment contents; and
means for sending said authentication information.

15. The system of claim 14 wherein said authentication information is information wherein a portion of information generated using identity confirmation information for a user making payment through said financial institution and said payment contents is abbreviated.

16. A system that is connected to a buyer system and a financial institution system by communication line, the system comprising:
a storage device storing a list of financial institutions through which payments are made, and a transaction with said buyer system;
a communication device receiving from said buyer system information an identified financial institution system of said list of financial institutions, login information identifying a buyer making a payment, and authentication information, said authentication information generated by said buyer system using ordering information and identification confirmation information, and sending to said identified financial institution system said login information, said authentication information and said billing information; and
a control device generating said billing information based on said transaction.

17. A method in a computer system for displaying a payment transaction by a buyer ordering an item from a merchant, wherein said merchant is paid for said order by a financial institution, the method comprising:
displaying a first field comprising order information;
displaying a second field comprising a user ID of said buyer at said financial institution; and
displaying a third field comprising a payment amount associated with said order information; and
wherein a one-time password is generated by said buyer using said payment amount, and wherein said one-time password and said user ID are sent to said financial institution.

18. The method of claim 17 further comprising displaying a pass phrase generated by said financial institution and wherein said one-time password is generated by said buyer using said payment amount and said pass phrase.

19. A computer readable medium storing a payment processing program used in a financial institution system that is connected to a merchant system by a communication network and that responds to payment requests sent through said communication network, the computer readable medium comprising:
a code for using a database to manage an user ID of a user making a payment through said financial institution in association with first identity confirmation information for said user;
a code for receiving from said merchant system said user ID identifying a user making said payment to said merchant, billing information for said payment, and authentication information generated by said user using ordering information and second identity confirmation information; and
a code for determining whether said payment request is valid using said first identity confirmation information and said ordering information and said authentication information.
